# EUROPÄISCHE PATENTSCHRIFT

(11) **EP 3 028 908 B1**
(45) Veröffentlichungstag und Bekanntmachung des Hinweises auf die Patenterteilung: **13.06.2018**
(21) Anmeldenummer: 15003316.5
(22) Anmeldetag: 21.11.2015
(51) Int. Cl.: B60T 7/04

(54) **BREMSPEDALANORDNUNG EINES LENKBREMSBAREN FAHRZEUGES, INSBESONDERE EINES ACKERSCHLEPPERS**
BRAKE PEDAL ASSEMBLY OF A VEHICLE WITH BRAKE STEERING, ESPECIALLY OF AN AGRICULTURAL TRACTOR
SYSTÈME DE PÉDALE DE FREIN D'UN VÉHICULE À FREIN DE DIRECTION, EN PARTICULIER UN TRACTEUR AGRICOLE

(30) Priorität: 04.12.2014 DE 102014017973
(43) Veröffentlichungstag der Anmeldung: 08.06.2016
(73) Patentinhaber: WABCO GmbH, 30453 Hannover (DE)
(72) Erfinder: Brütt, Mirko, 30952 Ronnenberg (DE); Haverkamp, Michael, 30455 Hannover (DE)
(74) Vertreter: Krause, Martin

(56) Entgegenhaltungen:
- EP-A1- 0 279 868
- WO-A1-85/04136
- US-A- 3 726 369
- US-A1- 2002 043 874

## Beschreibung

### Gebiet der Erfindung

Die Erfindung betrifft eine Bremspedalanordnung eines lenkbremsbaren Fahrzeuges, insbesondere eines Ackerschleppers mit den Merkmalen des Oberbegriffs des Patentanspruchs 1.

### Hintergrund der Erfindung

Bei lenkbremsbaren Fahrzeugen, beispielsweise Gleiskettenfahrzeugen und insbesondere landwirtschaftlichen Zugfahrzeugen in Form von Ackerschleppern wird zur Erzielung von möglichst kleinen Wendekreisen eine Fahrzeugseite abgebremst, währen die andere Fahrzeugseite nicht gebremst ist. Dadurch dreht das Fahrzeug um die gebremste Seite. Bei Ackerschleppern wird in der Regel ausschließlich ein Hinterrad der hinteren Fahrzeugachse gebremst, wodurch das Fahrzeug entsprechend um das gebremste Hinterrad dreht. Eine Bremsung beispielsweise des rechten Hinterrades bewirkt also eine Drehung des Ackerschleppers nach rechts. Derartige Lenkbremsungen dürfen aus gesetzlichen Gründen ausschließlich im Arbeitseinsatz des Ackerschleppers auf dem Felde stattfinden; bei Fahrten auf normalen Straßen muss die Lenkbremsfunktion außer Kraft gesetzt sein, insbesondere bei Fahrten mit einer Geschwindigkeit über 40 km/h.

Um diese gesetzliche Anforderung zu erfüllen, weisen Ackerschlepper üblicherweise zwei nebeneinander angeordnete Bremspedale, jeweils mit einer Trittplatte auf. Bei Fahrten auf normalen Straßen müssen diese beiden Bremspedale miteinander mechanisch gekoppelt sein, so dass eine Fußbetätigung eines Pedals gleichzeitig auch das jeweils andere Pedal betätigt. Eine derartige Anordnung mit zwei Bremspedalen, welche für den normalen Straßenbetrieb miteinander koppelbar sind, ist beispielsweise aus der DE 32 08 393 A1 bekannt.

Zwar haben sich derartige Anordnungen millionenfach bewährt, sind jedoch auch nicht frei von Nachteilen. So ist der Einsatz von zwei Bremspedalen naturgemäß mit doppelten Kosten verbunden. Außerdem ist das Koppeln bzw. Entkoppeln der beiden Pedale auf mechanischem Wege für den jeweiligen Fahrzeugführer umständlich und mit Zeitverlusten verbunden.

Es sind bereits Vorschläge gemacht worden, eine einzige Bremspedalanordnung einzusetzen, bei der die einzige Trittplatte sowohl die Normalbremsung, d. h. das gleichzeitige Bremsen wenigstens der angetriebenen Hinterräder und auch im Bedarfsfall die Lenkbremsung, das heißt, das Bremsen nur eines Rades einer Fahrzeugachse, bewirkt. So beschreibt die DE 20 52 401 A eine Bremsanlage für wahlweise Allrad- oder Einzelradbremsung, bei welcher ein Bremspedal mit seinem unteren Ende schwenkbar um einen ortsfesten Zapfen gelagert ist. Oberhalb des Schwenklagers greift an einer Anlenkstelle die Kolbenstange eines ortsfesten Geberzylinders für Druckmittel an. Am Pedalhebel sitzt am oberen Ende ein Trittstück, welches um eine in Längsrichtung des Pedalhebels verlaufende Achse aus einer Mittelstellung nach beiden Seiten kippbar gelagert ist. Je nach Kippstellung nach links bzw. rechts betätigt das Trittstück mit seine Unterseite einen elektrischen Kontakt und einen Schalter, durch welchen ein elektromagnetisches Wegeventil so betätigt wird, dass hydraulischer Bremsdruck nur einer der beiden Fahrzeugseiten zugeführt wird, wodurch nur eine der beiden Fahrzeugseiten gebremst wird. Eine derartige Ausgestaltung ermöglicht die Verwendung eines einzigen Bremspedals und eines einzigen Hauptbremszylinders. Nachteilig ist bei dieser Ausgestaltung die ergonomisch ungünstige Betätigung der als Trittstück bezeichneten Trittplatte. Denn während zur Einleitung einer Normalbremsung in gewohnter Weise der Fußballen des Fahrers die Trittplatte in Fußrichtung betrachtet nach unten drückt, setzt das Einleitung einer Lenkbremsung ein seitliches Abkippen der Trittplatte voraus, was entsprechend ein Schwenken des Fußes um den Innenrist bzw. Außenrist nötig macht. Dies ist eine für jeden Menschen ungewohnte Bewegungsrichtung, welche zum Einen einen Lernprozess erfordert und zum Anderen die Fußmuskulatur einer ungewohnten Belastung aussetzt. Hierbei ist zu bedenken, dass sich die Ferse bzw. die Sohle des Fußes wie gewohnt am Fahrzeugboden abstützt und als Kippachse für den das Bremspedal betätigenden Fuß fungiert. Zusätzlich neben diese Kippbewegung des Fußes, welche dem Fahrer keinerlei ungewohnten Belastung abverlangt, kommt bei dieser Anordnung also noch ein seitliches Kippen des Fußes in Richtung Innenrist bzw. Außenrist hinzu, was ergonomisch äußerst ungünstig ist.

Eine ähnliche Anordnung ist aus der EP 0 279 868 A1 bekannt. Auch bei dieser Anordnung ist die Trittplatte mit seitlichen Verlängerungen versehen, durch deren Abkippen nach rechts bzw. links die Betätigung eines Schalters zur Bremsung nur einer Fahrzeugseite betätigbar ist. Für diese Anordnung gelten bzgl. der ungünstigen Ergonomie die vorherigen Darlegungen. Ähnliches lässt sich auch zur EP 2 093 111 B1 sagen. Bei dieser sind Seitenpedale vorgesehen, welche gelenkig mit dem mittleren Bremspedal bzw. der mittleren Trittplatte verbunden sind. Auch bei dieser Anordnung ist es notwendig, durch Abkippen der Seitenpedale den Fuß zu verdrehen, um eine Lenkbremsung erzielen zu können. Nachteilig an jener Anordnung ist zudem der hohe mechanische Aufwand, der dort nötig ist, um die Seitenpedale mit den Schaltern zu verbinden.

### Aufgabe der Erfindung

Aufgabe der Erfindung ist es daher, eine Bremspedalanordnung der eingangs geschilderten Art zu schaffen, bei der die zuvor geschilderten Nachteile beseitigt werden. Insbesondere ist es Aufgabe der Erfindung, eine Bremspedalanordnung eines lenkbremsbaren Fahrzeugs zu schaffen, bei der eine Einleitung einer Lenkbremsung auf ergonomisch günstige Art und Weise ermöglicht ist.

### Zusammenfassung der Erfindung

Die Aufgabe wird auf überraschend einfache Art und Weise durch eine Bremspedalanordnung nach Anspruch 1 gelöst, wobei die Seitenplatten jeweils starr mit der Trittplatte verbunden sind und dadurch, dass der jeweils einer Seitenplatte zugeordnete Schalter so mit der jeweiligen Seitenplatte verbunden ist, dass ein Druckstück des jeweiligen Schalters direkt durch den Fuß des Fahrers betätigbar ist, wobei die Schalter in die Seitenplatten eingelassene Tastschalter sind, welche jeweils ein Druckstück aufweisen, welches jeweils so angeordnet ist, dass es vom Fuß des Fahrers direkt betätigbar ist, wobei die Richtung des Druckes, mit dem die beiden Druckstücke betätigbar sind, der Druckrichtung des Fußes des Fahrers auf den Zentralbereich der Trittplatte entspricht, oder wobei die Schalter auf die Seitenplatten der Trittplatte aufgesetzte Tastschalter sind, welche jeweils ein Druckstück aufweisen, welches jeweils so angeordnet ist, dass es vom Fuß des Fahrers direkt betätigbar ist, wobei die Richtung des Druckes, mit dem die beiden Druckstücke betätigbar sind, quer zur Druckrichtung der Trittplatte verläuft, so dass die Druckstücke durch den Innenrist oder durch den Außenrist des Fußes des Fahrers betätigbar sind.

Anders formuliert sind die zur Einleitung der Lenkbremsung notwendigen Schalter seitlich an der Haupttrittplatte so angeordnet, dass der Fuß des Fahrers diese Schalter direkt betätigt, und zwar so, dass ein Abkippen der Seitenplatten nicht mehr notwendig ist. Zur Einleitung einer Lenkbremsung muss der Fahrer seinen Fuß nur noch über die Ferse bzw. den Absatz seines Schuhs als Drehpunkt nach links oder rechts drehen und drückt dann von oben bzw. seitlich direkt auf das Druckstück des Schalters, oder, worauf noch näher eingegangen werden wird, bewirkt bereits die Drehbewegung des Fußes nach links oder rechts eine Betätigung des Druckstücks des jeweiligen Schalters. Derartige Drehbewegungen des Fußes um die Ferse ist jeder Fahrer gewohnt, beispielsweise dadurch, dass er im normalen Fahrbetrieb den Fuß vom Gaspedal auf das Bremspedal dreht.

Außerdem kann vorgesehen sein, die Länge jeder Seitenplatte jeweils der Breite der Trittplatte entspricht. Hierdurch entspricht die Aufstandsfläche für den Fuß bzw. Schuh des Fahrers auf den Seitenplatten der Aufstandsfläche der eigentlichen Trittplatte. Dies ist nicht nur eine ergonomisch günstige Maßnahme, welche den Fahrer vor Ermüdungen seines Fußes bei Lenkbremsungen schützt, sondern dient auch dazu, dass der Fahrer durch Tritt auf eine Seitenplatte die gesamte Trittplatte zur Betätigung des Bremsventils nieder treten kann.

In anderen praktischen Weiterbildungen kann vorgesehen sein, dass die Seitenplatten jeweils einstückig an der jeweils zugehörigen Seitenfläche des Zentralplattenbereichs angeformt sind. Dies bietet sich besonders dann an, wenn die Trittplatte mit den Seitenplatten als Gussteil, insbesondere als Aluminium-Druckgussteil ausgebildet sein soll.

Ebenso liegt es im Rahmen der Erfindung vorzusehen, dass die Bremspedalanordnung eine stehende Bremspedalanordnung ist, bei welcher die Fußplatte die Funktion eines Pedalarmes aufweist, oder dass die Bremspedalanordnung eine hängende Bremspedalanordnung ist, bei welcher die Fußplatte an einem drehbar am Fahrzeugaufbau angebrachten Bremspedalhebel befestigt ist.

In einer besonders bevorzugten Weiterbildung der Erfindung ist vorgesehen, dass die Bremspedalanordnung Teil einer zweikreisigen Bremsanlage eines Zugfahrzeuges ist, wobei die Bremsanlage wenigstens eine ECU aufweist, welche elektrisch mit den den Seitenplatten zugeordneten Schaltern und mit einer Differential-Bremsventileinrichtung verbunden ist.

In einer besonders praktischen Weiterbildung der Erfindung ist vorgesehen, die Differential-Bremsventileinrichtung aus wenigstens drei Magnetventilen besteht, von denen wenigstens ein Magnetventil einem ersten Bremskreis der Vorderräder des Zugfahrzeugs und von denen jeweils ein Magnetventil jeweils einem Hinterrad eines zweiten Bremskreises zugeordnet ist, wobei die Magnetventile jeweils mit einem Bremszylinder der Räder verbunden sind und Bremsfluid zu den Bremszylindern leiten oder von diesen absperren.

Besonders vorteilhaft ist ebenso eine Ausgestaltung der Erfindung, die sich dadurch auszeichnet, dass die Magnetventile der Differential-Bremsventileinrichtung derart miteinander und mit der ECU verschaltet sind, dass durch Betätigung eines der Schalter der Seitenplatten nach Freigabe durch die ECU das Absperren des Magnetventils oder der Magnetventile des ersten Bremskreises und das das Absperren des Magnetventils des ungebremst verbleibenden Rades des zweiten Bremskreises bewirkbar ist.

In einer besonders praktischen Weiterbildung der Erfindung ist vorgesehen, dass wenigstens eines der Magnetventile als ABS-Bremsventil ausgebildet ist.

Besonders vorteilhaft ist eine Ausgestaltung der Erfindung, die sich dadurch auszeichnet, dass die zweikreisige Bremsanlage eine hydraulische Bremsanlage mit Hydraulikflüssigkeit als Bremsfluid ist, wobei das Bremsventil ein hydraulisches Bremsventil ist.

Alternativ kann schließlich vorgesehen sein, dass die zweikreisige Bremsanlage eine pneumatische Bremsanlage mit Druckluft als Bremsfluid ist, wobei das Bremsventil ein pneumatisches Bremsventil ist.

### Kurze Beschreibung der Zeichnungen

Die Erfindung wird im Folgenden anhand der beiliegenden Zeichnung näher erläutert. Darin zeigt
- Fig. 1: ein erstes Ausführungsbeispiel einer erfindungsgemäßen Bremspedalanordnung von der Seite,
- Fig. 2: die Bremspedalanordnung aus Fig. 1 von hinten,
- Fig. 3: eine Trittplatte der Bremspedalanordnung aus Fig. 1 und 2 von vorne,
- Fig. 4: ein zweites Ausführungsbeispiel einer Trittplatte einer Bremspedalanordnung von vorne,
- Fig. 5: ein drittes Ausführungsbeispiel einer Trittplatte einer Bremspedalanordnung von der Seite,
- Fig. 6: ein Prinzipschaltbild einer der Bremspedalanordnung zugeordneten Bremsanlage, und
- Fig. 7: die schematische Aufsicht eines Ackerschleppers mit der erfindungsgemäßen Bremsventilanordnung.

### Detaillierte Beschreibung der Zeichnung

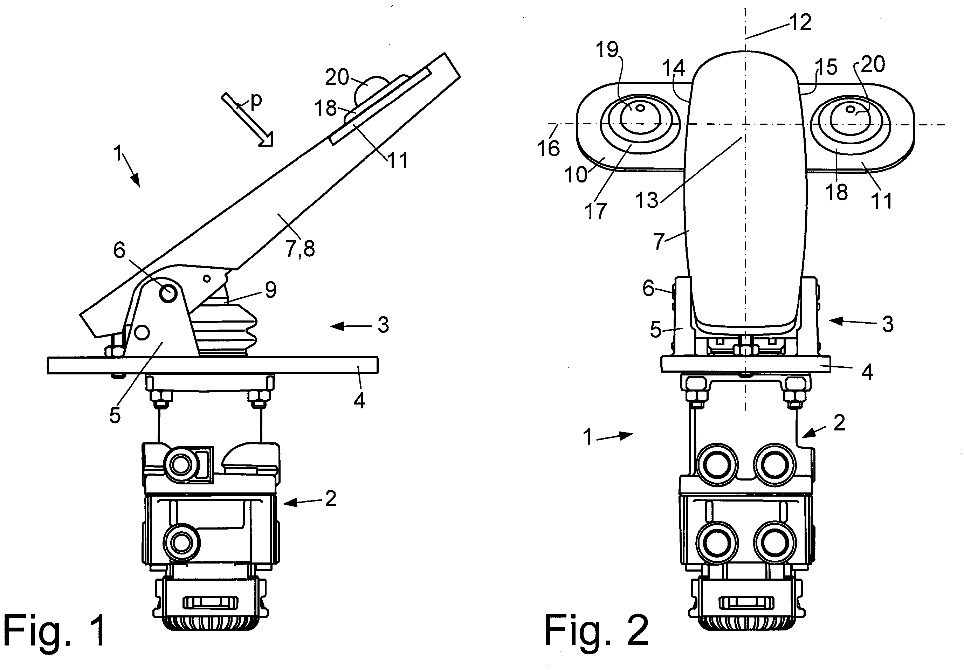

In den Figuren 1 und 2 ist ein erstes Ausführungsbeispiel einer erfindungsgemäßen Bremspedalanordnung 1 von der Seite bzw. von hinten dargestellt. Die Bremspedalanordnung 1 besteht im Wesentlichen aus einem an sich bekannten Bremsventil 2, bei welchem es sich um eine pneumatisches Zweikreisbremsventil handelt, welches von der Anmelderin unter der Baugruppennummer 461 317 XXX 0 seit vielen Jahren vertrieben wird. Auf das Bremsventil 2 aufgesetzt und mit diesem verbunden ist eine Pedalbaugruppe 3, bestehend aus einer Grundplatte 4, welche mit dem Bremsventil 2 und mit dem in den Figuren 1 und 2 nicht dargestellten Fahrzeug verschraubt ist. In einem Schwenklager 5 ist durch einen Achsbolzen 6 kippbeweglich eine Trittplatte 7 gelagert, welche gleichzeitig als Pedalarm 8 fungiert. Ein mit der Trittplatte 7 bzw. mit dem Pedalarm 8 verbundenes Druckstück 9 bewirkt bei Beaufschlagung der Trittplatte 7 mit einem Druck p, welcher in Fig. 1 durch den Pfeil p angedeutet ist, ein Niederdrücken des Druckstücks 9 und hierdurch eine Betätigung des Bremsventils 2, wodurch im Normalbetrieb, also bei Fahrten insbesondere auf der Straße, pneumatischer Druck in beide Bremskreise des Fahrzeuges ausgesteuert wird, wodurch beide Seiten des Fahrzeuges gebremst werden.

Der grundsätzliche Aufbau der Pedalbaugruppe 3 ist an sich bekannt. Pedalbaugruppen dieser Art werden von der Anmelderin unter der Teile-Nummer 461 317 799 2 seit Jahren vertrieben.

Von dem an sich bekannten Aufbau derartiger Pedalbaugruppen 3 unterscheidet sich die Trittplatte 7 vor allem durch die insbesondere in Fig. 2 zu erkennenden Seitenplatten 10, 11. Die Trittplatte 7 weist eine Längsachse 12 auf, welche mit der Mittellinie oder Mittelachse eines Zentralplattenbereichs 13 zusammenfällt. Der Zentralplattenbereich 13 entspricht bezüglich seiner Außenform, Länge und Breite der normalen Trittplatte von herkömmlichen Bremspedaltrittplatten. In einer vorderen, dem Schwenklager 5 am weitesten entfernten Bereich sind an Seitenflächen 14, 15 des Zentralplattenbereichs 13 bzw. der Trittplatte 7 die Seitenplatten 10, 11 angeformt. Eine gemeinsame Längsachse 16 der Seitenplatten 10, 11 ist quer zur Längsachse 12 der Trittplatte 7 angeordnet.

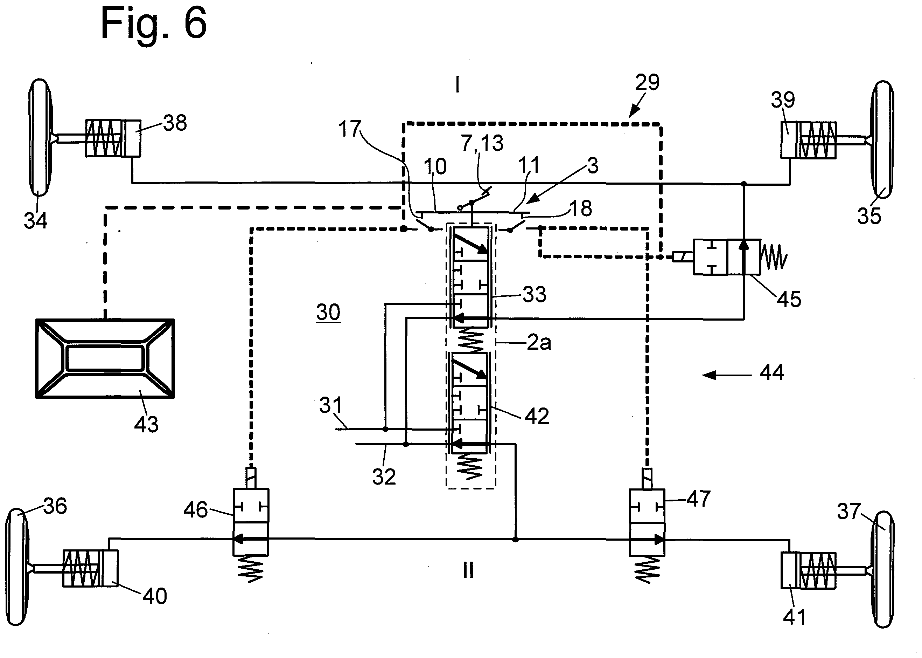

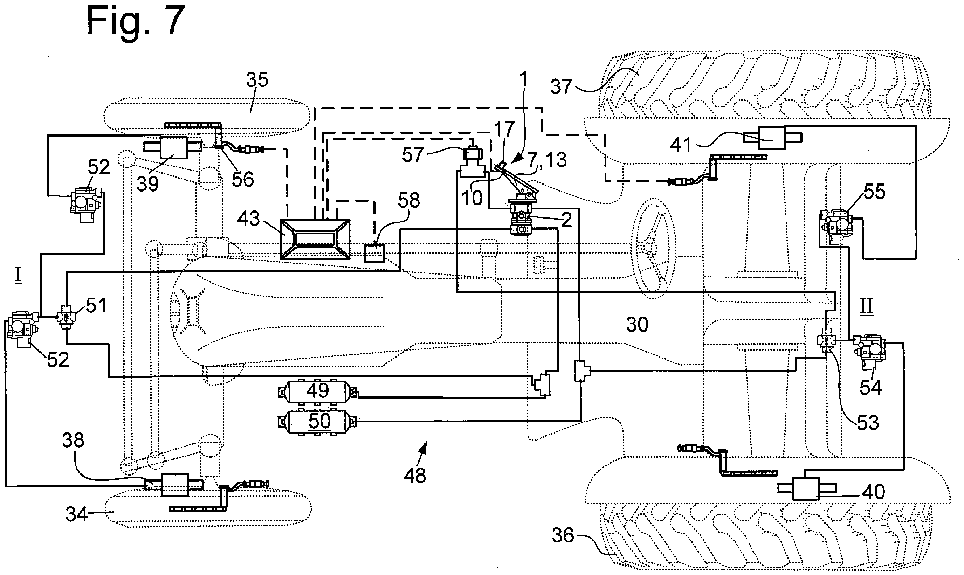

Die Länge jeder Seitenplatte 10, 11 entspricht jeweils der Breite der Trittplatte 7 bzw. des Zentralplattenbereichs 13, wobei mit Länge der Seitenplatte 10; 11 die Länge der Seitenplatte 10; 11 entlang der gemeinsame Längsachse 16 der Seitenplatten 10, 11, ausgehend von der jeweils zugehörigen Seitenfläche 14; 15 des Zentralplattenbereichs 13 bis zu einer Endkante gemeint sein soll. Entsprechend bedeutet Breite der Triplatte 7 bzw. Breite des Zentralplattenbereichs 13 der Abstand zwischen von Seitenfläche 14; 15 des Zentralplattenbereichs 13, gemessen entlang der gemeinsame Längsachse 16 der Seitenplatten 10, 11 bzw. quer zur Längsachse 12 der Trittplatte 7. Anders formuliert bieten die Seitenplatten 10, 11 hinsichtlich der Breite eines Fußes bzw. eines Schuhs die gleiche Auftrittsfläche wie die Trittplatte 7 bzw. der Zentralplattenbereich 13. Dies ist insofern von Belang, als dass ein Tritt auf die Seitenplatte nicht nur elektrische Schalter - auf die noch näher eingegangen werden wird - betätigen soll, sondern auch das mit der Trittplatte 7 verbundene Bremsventil 2 betätigen soll. Auf diesen Aspekt der Erfindung wird ebenfalls in Zusammenhang mit Fig. 6 und Fig. 7 näher eingegangen werden.

Die Seitenplatten 10, 11 sind im Ausführungsbeispiel einstückig mit der Trittplatte 7 bzw. mit dem Zentralplattenbereich 13 verbunden, beispielsweise dadurch, das das einstückige Bauteil der Trittplatte, bestehend aus dem Zentralplattenbereich 13 und den beiden Seitenplatten 10, 11 ein Aluminium-Druckgussteil ist. Es liegt jedoch auch im Rahmen der Erfindung, die Seitenplatten 10, 11 durch andere geeignete Befestigungsmethoden mit der Trittplatte bzw. mit dem Zentralplattenbereich 13 zu verbinden, beispielsweise durch Schrauben, Schweißen, Nieten oder dergleichen. Wichtig in diesem Zusammenhang ist lediglich, dass die Seitenplatten 10, 11 starr mit der Trittplatte 7 verbunden sind. In die Seitenplatten 10, 11 ist jeweils ein elektrischer Schalter 17, 18 eingesetzt. Hierzu weisen die Seitenplatten 10, 11 jeweils eine in den Figuren nicht zu erkennende Bohrung auf. Jeder der beiden Schalter 17, 18 weist ein Druckstück 19, 20 auf, welches jeweils so angeordnet ist, dass es vom Fuß des Fahrers direkt betätigbar ist.

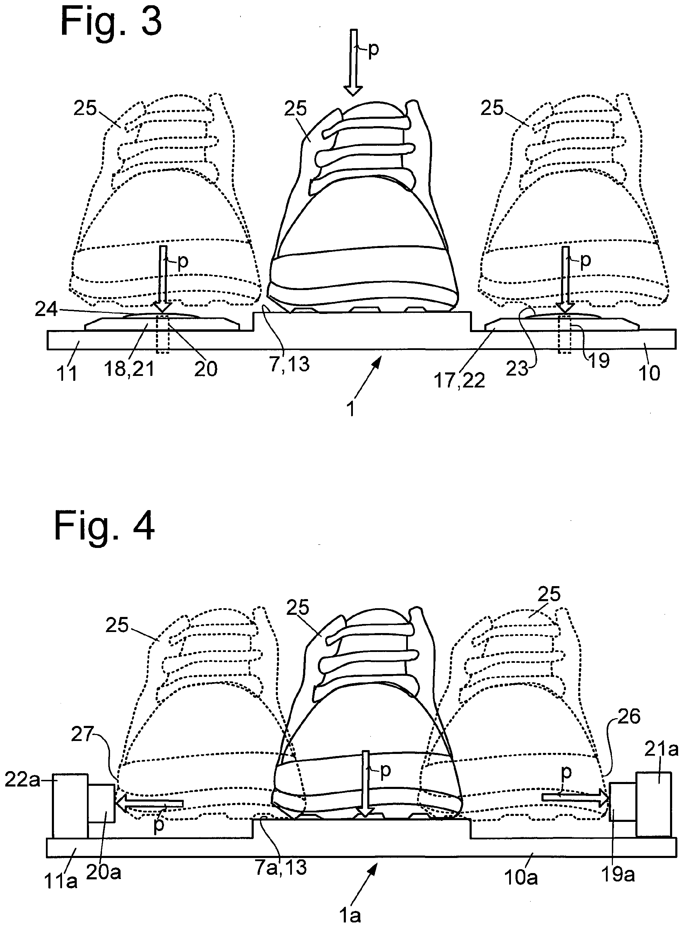

Bei dem in den Figuren 1 bis 3 dargestellten ersten Ausführungsbeispiel handelt es sich - was insbesondere der Fig. 3 zu entnehmen ist - um Tastschalter 21, 22, deren Druckstück 19, 20 jeweils durch eine in etwa kugelsegmentförmige Schutzhaube 23, 24 aus einem elastomeren Material abgedeckt sind. Die Druckstücke 19, 20 werden - ebenso wie der Zentralplattenbereich 13 - durch den in Fig. 3 nur angedeuteten Fuß bzw. Schuh 25 des Fahrers betätigt, wobei die Richtung des Druckes, mit dem die beiden Druckstücke 19, 20 betätigbar sind, der Druckrichtung des Fußes des Fahrers auf den Zentralbereich 13 der Trittplatte 7 entsprechend dem Pfeil p entspricht.

Zur Betätigung der beiden elektrischen Schalter 17, 18 muss der Fahrer also nur seinen Fuß bzw. Schuh 25 nach links oder rechts verdrehen, wobei die Ferse bzw. der Absatz des Schuhs 25 als Drehpunkt wirkt. Der Fahrer drückt nach der Drehbewegung den Schuh 25 nach unten, wodurch das Druckstück 19 bzw. das Druckstück 20 nach unten gedrückt und ein in den Figuren nicht dargestellter elektrischer Kontakt geschlossen wird.

Bei den in den Figuren 1 bis 3 dargestellten elektrischen Schaltern 17, 18 kann es sich um handelsübliche Tastschalter handeln, wie sie beispielsweise von der Firma Hella unter der Artikelnummer 6EJ 996 067717 oder der Firma Haco unter der Teilenummer 4513455H vertrieben werden.

In Fig. 4 ist ein zweites Ausführungsbeispiel einer Trittplatte 7a von vorne dargestellt. Die Trittplatte 7a entspricht weitgehend der Trittplatte 7 der Figuren 1 bis 3, wobei die Trittplatte 7a mit den weiteren Komponenten gemäß den Figuren 1 und 2 verbunden ist, also mit der Grundplatte 4 mit Schwenklager 5 und dem Bremsventil 2. Die Trittplatte 7a weist ebenfalls zwei Seitenplatten 10a, 11a auf, auf denen jeweils ein Tastschalter 21a, 22a angeordnet ist. Im Gegensatz zu den Tastschaltern 21, 22 gemäß den Figuren 1 bis 3 sind die Tastschalter 21a, 22a nicht in die Seitenplatten 10a, 11a eingelassen, sondern auf die Seitenplatten 10a, 11a aufgesetzt. Die auf die Seitenplatten 10a, 11a jeweils zu ihren äußeren Randbereichen aufgesetzten Tastschalter 21a, 22a weisen jeweils ein Druckstück 19a, 20a auf, bei welchen die Betätigungsrichtung bzw. die Druckachse p quer zur Druckrichtung der Trittplatte 7a verläuft. Die Betätigung der Druckstücke 19a, 20a erfolgt beim zweiten Ausführungsbeispiel also nicht durch das Drauftreten der Sohle des Schuhs 25, sondern rein durch ein seitliches Verdrehen des Schuhs 25, wodurch eine Betätigung des Druckstücks 19a durch den Innenrist 26 des Schuhs 25 erfolgt, während das Druckstück 20a des Tastschalters 22a durch den Außenrist 27 des Schuhs 25 betätigt wird. Hierbei sei der Vollständigkeit halber darauf hingewiesen, dass es sich bei dem in den Figuren 3 5 dargestellten Schuh 25 um einen rechten Schuh 25 handelt, da Trittplatten von Bremsventilen bzw. von Bremspedalen üblicherweise durch den rechten Fuß betätigt werden. Hierbei erfolgt die Betätigung eines der Tastschalter 21a, 22a durch ein einfaches Verdrehen des Fußes bzw. des Schuhs 25. Die Betätigung der einzelnen Tastschalter 21a, 22a kann hier also noch einfacher und schneller erfolgen.

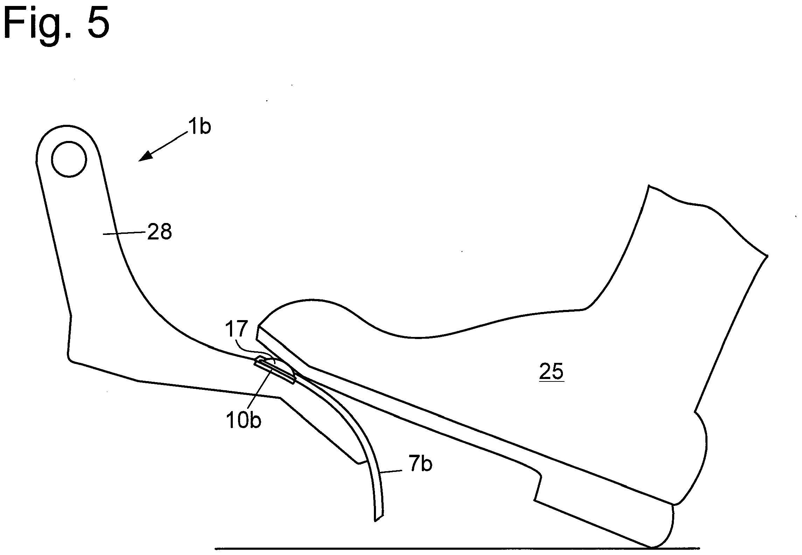

In Fig. 5 ist ein drittes Ausführungsbeispiel einer Trittplatte 7b von der Seite dargestellt. Im Gegensatz zu den Ausführungsbeispielen gemäß den Figuren 1 bis 4 ist die Trittplatte 7b nicht einer stehenden Bremspedalanordnung, sondern einer hängenden Bremspedalanordnung zugeordnet. Entsprechend ist die Trittplatte 7b von ihrer Größe her, insbesondere hinsichtlich ihrer Längserstreckung, sehr viel kleiner bzw. kürzer ausgeführt und ist die Trittplatte 7b an einem Bremspedalhebel 28 angebracht, wobei der Bremspedalhebel gelenkig an einem nicht näher dargestellten Fahrzeugaufbau angebracht ist und entsprechen ein in Fig. 5 nicht dargestelltes Bremsventil betätigt. Ebenso wie die Trittplatten 7, 7a der Figuren 1 bis 4 weist die Trittplatte 7b der Bremspedalanordnung 1b Seitenplatten 10b, 11b auf, wobei in Fig. 5 nur die linke Seitenplatte 10b dargestellt ist. In die Seitenplatte 10b ist ein elektrischer Schalter 17 eingesetzt, welcher dem Schalter 17 gemäß den Figuren 1 bis 3 entspricht; entsprechend weist die in Fig. 5 nicht dargestellte Seitenplatte 11b einen elektrischen Schalter 18 auf, der ebenfalls dem Tastschalter 18 aus den Figuren 1 bis 3 entspricht. Anstelle der Tastschalter 17, 18 können aber auch bei der Ausgestaltung gemäß Fig. 5 Tastschalter 21a, 22a entsprechend der Ausgestaltung gemäß Fig. 4 eingesetzt werden.

In Fig. 6 ist schematisch ein hydraulisch-elektrischer Schaltplan einer Bremsanlage 29 eines nur abstrakt dargestellten Zugfahrzeugs 30 dargestellt, welches die Pedalbaugruppe 3 gemäß den Figuren 1 bis 3 aufweist. Die Pedalbaugruppe 3 ist hierbei jedoch an ein Bremsventil 2a angeflanscht, bei welchem es sich ebenfalls um ein zweikreisiges Doppelrelaisventil handelt, welches aber nicht mit pneumatischem, sondern mit hydraulischem Druck betrieben wird. Entsprechend wird in der gesamte Bremsanlage 29 Hydraulikflüssigkeit als Bremsfluid genutzt. Das zweikreisige Doppelrelaisventil 2a ist an sich bekannt und ist beispielsweise durch die Anmelderin unter der Bauteilgruppennummer 467 406 XXX 0 im Handel erhältlich. Entsprechend der hydraulischen Ausgestaltung der Schaltung weist das Bremsventil 2a einen hydraulischen Zulauf 31 und einen hydraulischen Rücklauf 32 auf. Das in Fig. 6 obere Relaisventil 33 ist für einen ersten Bremskreis I zuständig. Funktional an den ersten Bremskreis I angeschlossen sind ein linkes Vorderrad 34 und ein rechtes Vorderrad 35; ein linkes Hinterrad 36 und ein rechtes Hinterrad 37 sind dagegen einem zweiten Bremskreis II zugeordnet. Konkret betätigt werden die Bremsen der Räder 34 bis 37 durch Bremszylinder 38 bis 41. Bei dem zweiten Bremskreis handelt es sich also um den Bremskreis der Hinterräder 36, 37, welcher durch ein zweites Relaisventil 42 des Bremsventils 2a ansteuerbar ist.

Bei Normalbremsungen, also bei Bremsungen entweder auf normaler Straße oder bei Bremsungen auf dem Acker, bei dem die Bremsung aller Räder gewünscht ist, betätigt der Fahrer in gewohnter Weise die Trittplatte 7 bzw. den Zentralplattenbereich 13, wodurch beide Relaisventile 33, 42 des Bremsventils 2a betätigt werden. Entsprechend wird hydraulischer Druck den Bremszylindern 38 bis 41 gleichmäßig zugeführt und es werden alle Räder 34 bis 37 gebremst.

Wird hingegen bei Fahrten abseits von Straßen eine Lenkbremsung gewünscht, betätigt der Fahrer einen der in den Seitenplatten 10, 11 integrierten, in Fig. 6 nur angedeuteten elektrischen Schalter 17, 18. Die Schalter 17, 18 sind elektrisch jeweils mit einer elektronischen Steuereinrichtung oder ECU 43 (electronic control unit) verbunden. Die ECU 43 überwacht verschiedenste Parameter des Fahrzeugs, wie insbesondere die Fahrzeuggeschwindigkeit, Raddrehzahlen, Lenkwinkel, Fahrzeugbeschleunigung und dergleichen mehr. Die ECU 43 ist durch elektrische Leitungen mit den Schaltern 17, 18 verbunden. Erkennt die ECU 43 beispielsweise durch Information aus der Fahrzeuggeschwindigkeit oder aus GPS-Daten, dass eine Lenkbremsung aktuell nicht zulässig ist, ignoriert sie das Schaltsignal des entsprechenden elektrischen Schalters und verweigert eine einseitige Fahrzeugbremsung. In diesem Fall wird entsprechend dem auf die Trittplatte 7 wirkenden Druck das Bremsventil 2a mit seinen beiden Relaisventilen 33, 42 rein mechanisch betätigt, und es wird entsprechend hydraulischer Druck an alle Bremszylinder 38 bis 41 ausgesteuert.

Erkennt die ECU 43 jedoch, dass gegen eine Lenkbremsung nichts einzuwenden ist, wird das vom jeweiligen elektrischen Schalter 17, 18 generierte elektrische Signal einer Differential-Bremsventileinrichtung 44 zugeleitet. Diese Differential-Bremsventileinrichtung 44 besteht aus drei Magnetventilen 45, 46, 47, bei welchen es sich jeweils um 2/2-Wegeventile handelt. Hierbei ist ein vorderes Magnetventil 45 dem vorderen Bremskreis I zugeordnet, während zwei hintere Magnetventile 46, 47 jeweils einem Hinterrad 36, 37 des zweiten Bremskreises II zugeordnet sind. Alle drei Magnetventile 45, 46, 47 sind als im Normalfall, das heißt im unbestromten Zustand, offenes Ventil ausgestaltet. Im unbestromten Zustand der Magnetventile 45 bis 47 sind also alle drei Ventile 45 bis 47 offen, wodurch bei Druck auf irgendeinen Punkt der Trittfläche 7 bzw. der Seitenplatten 10, 11 das Bremsventil 2a betätigt und hydraulischer Druck an alle Bremszylinder 38 bis 41 zugeleitet wird.

Erkennt die ECU 43 jedoch bei Betätigung eines der Schalter 17, 18, dass eine Lenkbremsung statthaft ist, so wird das vordere Magnetventil 45 und eines der hinteren Magnetventile 46 oder 47 bestromt. Dies führt dazu, dass hydraulischer Druck nur zu einem der beiden Bremszylinder 40, 41 der Hinterräder 36, 37 gelangen kann, während das jeweils andere Hinterrad 37 bzw. 36 ungebremst bleibt, während die gesamte Vorderachse, also beide Räder 34, 35 der Vorderachse, ungebremst bleiben. Es wird dann entsprechend der Wahl des Fahrers für die linke oder rechte Seite des Fahrzeuges nur eines der Hinterräder 36 oder 37 gebremst, was dann zu einer Lenkbremsung führt.

Die Magnetventile 45 bis 47 können als ABS-Ventile ausgebildet sein. Im Fall, dass das Basisfahrzeug bereits mit einer ABS-Bremsanlage versehen ist, ist es in diesem Falle möglich, die bereits ohnehin vorhandenen ABS-Magnetventile in der oben geschilderten Weise zu verschalten, so dass keine zusätzlichen Magnetventile in das Bremssystem des Fahrzeugs eingebaut werden müssen.

In Fig. 7 ist schließlich schematisch ein Zugfahrzeug 30 von oben dargestellt, welches mit einer Bremsanlage ähnlich der in Fig. 6 dargestellten ausgestattet ist. Im Gegensatz zur Bremsanlage 29 der Fig. 6 ist die Bremsanlage 48 des Zugfahrzeugs der Fig. 7 eine pneumatische Bremsanlage, bei welcher Druckluft als Bremsfluid verwendet wird.

Bei dem in Fig. 7 in Punktlinien angedeuteten Zugfahrzeug 30 handelt es sich um einen vorwiegend landwirtschaftlich nutzbaren Ackerschlepper. Grundsätzlich lässt sich die im Nachfolgenden näher beschriebene Bremsanlage 48 aber auch für andere Arten von Kraftfahrzeugen einsetzen, bei denen eine Lenkbremsfunktion üblich bzw. wünschenswert ist, beispielsweise selbstfahrende Baumaschinen, Radlader, forstwirtschaftlich genutzte Knickschlepper oder für Gleiskettenfahrzeuge.

Das Zugfahrzeug 30 weist lenkbare Vorderräder 34, 35 und starre Hinterräder 36, 37 auf. Vorderräder 34, 35und Hinterräder 36, 37 werden im Nachfolgenden zusammenfassend auch als Räder 34 bis 37 bezeichnet. Die Räder 34 bis 37 sind jeweils mit einer an sich bekannten Bremse ausgerüstet, von welcher jeweils nur schematisch ein Bremszylinder 38 bis 41 dargestellt ist. Wie die Bremsanlage 29 gemäß Figur 6 auch, ist die Bremsanlage 48 gemäß Figur 7 zweikreisig ausgebildet, wobei die Bremszylinder 37, 38 der Vorderräder 33, 34 an einen ersten Bremskreis I und die Bremszylinder 39, 40 der Hinterräder 35, 36 an einen zweiten Bremskreis II angeschlossen sind. Entsprechend der zweikreisigen Ausbildung der Bremsanlage 48 sind zwei Druckluftbehälter 49, 50 vorgesehen, wobei der Druckluftbehälter 49 den Bremskreis I und der Druckluftbehälter 50 dem Bremskreis II zugeordnet ist. Die Druckluftbehälter 49, 50 werden in nicht dargestellter, an sich bekannter Weise mit Druckluft befüllt, was in der Regel über eine Kompressoranlage mit zwischengeschalteter Lufttrockneranlage erfolgt.

Die Druckluftbehälter 49, 50 sind über nicht im Einzelnen mit Bezugsziffern versehenen Druckluftleitungen an das Bremsventil 2 der Bremspedalanordnung 1 angeschlossen. Wird bei Normalbremsung Druck auf die Trittplatte 7 der Bremspedalanordnung 1 ausgeübt, gelangt pneumatischer Druck über das Bremsventil 2 an beide Bremskreise I, II. Der vom Bremsventil 2 ausgesteuerte pneumatische Druck wird im Falle des vorderen Bremskreises I einem Doppelrückschlagventil 51 zugeführt, welches den pneumatischen Druck an zwei vordere Magnetventile in Form von ABS-Ventilen 52 zuführt. Über die ABS-Ventile 52 wird der pneumatische Ausgangsdruck den vorderen Bremszylindern 38, 39 der Vorderräder 34, 35 zugeleitet. Gleichzeitig gelangt ausgesteuerter Druck zum hinteren Bremskreis II, wobei dort ebenfalls pneumatischer Druck über ein Doppelrückschlagventil 53 zwei hinteren Magnetventilen in Form von ABS-Ventilen 54, 55 zugeleitet wird, welche den pneumatischen Druck den Bremszylindern 40 ,41 der Hinterräder 36, 37 zuführen, so dass gleichzeitig die Vorderräder 34, 35 und die Hinterräder 36, 37 gebremst werden.

Das bei der Bremsanlage 48 gemäß Figur 7 ebenfalls vorhandene elektronische Steuergerät 43 ist elektrisch mit Raddrehzahlsensoren 56 jedes der Räder 34 bis 37 verbunden, wobei zur Vereinfachung nur der Drehzahlsensor 56 des rechten Vorderrades 35 mit einer Bezugsziffer versehen ist. Das Steuergerät 43 ist elektrisch in nicht dargestellter Weise mit weiteren elektrischen und elektronischen Komponenten verbunden, wie Schalter, dem Akkumulator des Zugfahrzeugs 30, Warn- und Anzeigeleuchten im Armaturenbrett, einer CAN-Bus-Leitung gemäß SAEJ1939, und dergleichen. Ebenfalls elektrisch über eine elektrische Leitung ist das Steuergerät 43 mit einem Drucksensor 57 verbunden, welcher Luftdruck bzw. pneumatischen Ausgangs-Steuerdruck in einer Ausgangsdruckleitung des zweikreisigen Bremsventils 2 erfasst. Ebenso ist das Steuergerät 43 elektrisch mit einem Lenkwinkelsensor 58 verbunden, wodurch die ECU 43 auch Lenkwinkeldaten erfassen und für das Bremsmanagement verarbeiten kann.

Im Zusammenhang mit der Erfindung besonders wichtig ist jedoch eine elektrische Leitung 59, mit der das Steuergerät 43 elektrisch mit dem elektrischen Schalter 17 in der linken Seitenplatte 10 der Trittplatte 7 verbunden ist. Entsprechend - allerdings in Figur 7 nicht dargestellt - ist der elektrische Schalter 18 der rechten Seitenplatte 11 der Trittplatte 7 mit der ECU 43 verbunden.

Die Funktion der Bremsanlage 48 entspricht weitgehend der zuvor im Zusammenhang mit der Bremsanlage 29 gemäß Figur 7 beschriebenen Art und Weise. Auch hier sorgt die ECU 43 dafür, dass im Fall der Unzulässigkeit einer Lenkbremsung der entsprechend vom Fahrer eingegebene Lenkbremswunsch ignoriert wird und stattdessen eine Normalbremsung, das heißt eine Bremsung aller Räder 34 bis 37 stattfindet. Erst wenn die ECU 43 erkannt hat, dass eine Lenkbremsung statthaft ist, lässt sie den Wunsch des Fahrers nach einer Lenkbremsung Wirklichkeit werden. Hierbei werden die ebenfalls als 2/2-Wegeventile ausgebildeten vorderen ABS-Ventile 52 bestromt, wodurch Steuerdruck von den zugehörigen Bremszylindern 38, 39 abgeschaltet wird. Ebenso wird eines der hinteren Magnetventile 54, 55 bestromt, so dass ein hinteres Rad ungebremst bleibt. Wird vom Fahrer der linke Schalter 17 der linken Seitenplatte 10 betätigt, wird entsprechend neben beiden vorderen Magnetventilen 52 auch das hintere rechte Magnetventil 55 bestromt, so dass dann nur das linke Hinterrad 36 gebremst wird und eine Lenkbremsung stattfinden kann.

In Abweichung der in Figur 7 dargestellten Bremsanlage 48 ist es auch möglich, anstelle von zwei ABS-Ventilen 52 des vorderen Bremskreises I nur ein ABS-Ventil 52 vorzusehen.

Das Bestromen bzw. Nicht-Betromen der Magnetventile 52 bis 55 erfolgt auf die gleiche Weise, wie dies bei der Differential-Bremsventileinrichtung 44 gemäß Fig. 6 beschrieben wurde. Daher bilden die entsprechend verschalteten vorderen Magnetventile 52 und die beiden hinteren Magnetventile 54, 55 ebenfalls eine Differential-Bremsventileinrichtung, welche in Fig. 7 jedoch nicht mit einer eigenen Bezugsziffer gekennzeichnet ist.

### Bezugszeichenliste (Bestandteil der Beschreibung)

- 1: Bremspedalanordnung
- 1a: Bremspedalanordnung
- 1b: Bremspedalanordnung
- 2: Bremsventil
- 2a: Bremsventil
- 3: Pedalbaugruppe
- 4: Grundplatte
- 5: Schwenklager
- 6: Achsbolzen
- 7: Trittplatte
- 7a: Trittplatte
- 7b: Trittplatte
- 8: Pedalarm
- 9: Druckstück
- 10: Seitenplatte
- 10a: Seitenplatte
- 10b: Seitenplatte
- 11: Seitenplatte
- 11a: Seitenplatte
- 11b: Seitenplatte
- 12: Längsachse
- 13: Zentralplattenbereich
- 14: Seitenfläche
- 15: Seitenfläche
- 16: Längsachse
- 17: Elektrischer Schalter
- 18: Elektrischer Schalter
- 19: Druckstück
- 19a: Druckstück
- 20: Druckstück
- 20a: Druckstück
- 21: Tastschalter
- 21a: Tastschalter
- 22: Tastschalter
- 22a: Tastschalter
- 23: Schutzhaube
- 24: Schutzhaube
- 25: Schuh
- 26: Innenrist
- 27: Außenrist
- 28: Bremspedalhebel
- 29: Hydraulische Bremsanlage
- 30: Zugfahrzeug
- 31: Hydraulischer Zulauf
- 32: Hydraulischer Rücklauf
- 33: Erstes Relaisventil
- 34: Vorderrad
- 35: Vorderrad
- 36: Hinterrad
- 37: Hinterrad
- 38: Bremszylinder
- 39: Bremszylinder
- 40: Bremszylinder
- 41: Bremszylinder
- 42: Zweites Relaisventil
- 43: Elektronische Steuervorrichtung
- 44: Differential-Bremsventileinrichtung
- 45: Vorderes Magnetventil
- 46: Hinteres Magnetventil
- 47: Hinteres Magnetventil
- 48: Pneumatische Bremsanlage
- 49: Druckluftbehälter
- 50: Druckluftbehälter
- 51: Doppelrückschlagventil
- 52: ABS-Ventil
- 53: Doppelrückschlagventil
- 54: Hinteres ABS-Ventil
- 55: Hinteres ABS-Ventil
- 56: Raddrehzahlsensor
- 57: Drucksensor
- 58: Lenkwinkelsensor
- 59: Elektrische Leitung

- I: erster Bremskreis
- II: zweiter Bremskreis

## Patentansprüche

1. Bremspedalanordnung (1; 1a; 1b) eines lenkbremsbaren Fahrzeuges (30), insbesondere eines Ackerschleppers, bestehend aus einer Pedalbaugruppe (3) mit einer fußbetätigbaren Trittplatte (7; 7a; 7b), durch deren Betätigung ein Bremsventil (2; 2a) betätigbar ist, wobei die Trittplatte (7; 7a; 7b) einen mit der Längsachse (12) der Trittplatte (7) zusammen fallenden Zentralplattenbereich (13), dessen Breite in etwa der Breite eines menschlichen Fußes entspricht, und zwei Seitenplatten (10, 11) aufweist, welche jeweils seitlich am Zentralplattenbereich angeordnet sind, wobei ein Druck auf jeweils eine Seitenplatte (10, 11; 10a, 11a; 10b, 11b) jeweils einen elektrischen Schalter (17, 18; 21, 22; 21a; 22a) betätigt, durch dessen Betätigung die Bremsung eines Rades (36; 37) einer Fahrzeugachse zur Einleitung einer Lenkbremsung bewirkbar ist, wobei die Seitenplatten (10, 11; 10a, 11a; 10b, 11b) jeweils starr mit dem Zentralplattenbereich (13) der Trittplatte (7) verbunden sind, **dadurch gekennzeichnet, dass** der jeweils einer Seitenplatte (10, 11; 10a, 11a; 10b, 11b) zugeordnete Schalter (17, 18; 21, 22; 21a, 22a) so mit der jeweiligen Seitenplatte (10, 11; 10a, 11a; 10b, 11b) verbunden ist, dass ein Druckstück (19; 19a; 20; 20a) des jeweiligen Schalters (17, 18; 21, 22; 21a; 22a) direkt durch den Fuß (25) des Fahrers betätigbar ist, wobei die Schalter (17, 18) in die Seitenplatten (10, 11; 10b, 11b) eingelassene Tastschalter (21, 22) sind, welche jeweils ein Druckstück (19, 20) aufweisen, welches jeweils so angeordnet ist, dass es vom Fuß (25) des Fahrers direkt betätigbar ist, wobei die Richtung des Druckes, mit dem die beiden Druckstücke (19, 20) betätigbar sind, der Druckrichtung des Fußes (25) des Fahrers auf den Zentralbereich (13) der Trittplatte (7) entspricht, oder wobei die Schalter (17, 18) auf die Seitenplatten (10a, 11a) der Trittplatte (7a) aufgesetzte Tastschalter (21a, 22a) sind, welche jeweils ein Druckstück (19a, 20a) aufweisen, welches jeweils so angeordnet ist, dass es vom Fuß (25) des Fahrers direkt betätigbar ist, wobei die Richtung des Druckes, mit dem die beiden Druckstücke (19a, 20a) betätigbar sind, quer zur Druckrichtung der Trittplatte (7a) verläuft, so dass die Druckstücke (19a, 20a) durch den Innenrist (26) oder durch den Außenrist (27) des Fußes (25) des Fahrers betätigbar sind.

2. Bremspedalanordnung nach Anspruch 1, **dadurch gekennzeichnet, dass** die Länge jeder Seitenplatte (10, 11; 10a, 11a; 10b, 11b) jeweils der Breite der Trittplatte (7, 7a, 7b) entspricht.

3. Bremspedalanordnung nach Anspruch 1 oder 2, **dadurch gekennzeichnet, dass** die Seitenplatten (10, 11; 10a, 11a; 10b, 11b) jeweils einstückig an der jeweils zugehörigen Seitenfläche (14; 15) des Zentralplattenbereichs (13) angeformt sind.

4. Bremspedalanordnung nach wenigstens einem der Ansprüche 1 - 3, **dadurch gekennzeichnet, dass** die Bremspedalanordnung (1; 1a; 1b) eine stehende Bremspedalanordnung (1; 1a) ist, bei welcher die Fußplatte (7; 7a) die Funktion eines Pedalarmes (8) aufweist, oder dass die Bremspedalanordnung (1b) eine hängende Bremspedalanordnung (1b) ist, bei welcher die Fußplatte (7b) an einem drehbar am Fahrzeugaufbau angebrachten Bremspedalhebel (28) befestigt ist.

5. Bremspedalanordnung wenigstens nach Anspruch 1, **dadurch gekennzeichnet, dass** die Bremspedalanordnung (1; 1a; 1b) Teil einer zweikreisigen Bremsanlage (29; 48) eines Zugfahrzeuges (30) ist, wobei die Bremsanlage (29; 48) wenigstens eine ECU (43) aufweist, welche elektrisch mit den den Seitenplatten (10, 11; 10a, 11a; 10b, 11b) zugeordneten Schaltern (17, 18; 21, 22; 21a, 22a) und mit einer Differential-Bremsventileinrichtung (44) verbunden ist.

6. Bremspedalanordnung nach Anspruch 5, **dadurch gekennzeichnet, dass** die Differential-Bremsventileinrichtung (44) aus wenigstens drei Magnetventilen (45, 46, 47; 52, 54, 55) besteht, von denen wenigstens ein Magnetventil (45; 52) einem ersten Bremskreis (I) der Vorderräder (34, 35) des Zugfahrzeugs (30) und von denen jeweils ein Magnetventil (46; 54; 47; 55) jeweils einem Hinterrad (36; 37) eines zweiten Bremskreises (II) zugeordnet ist, wobei die Magnetventile (45, 46, 47; 52, 54, 55) jeweils mit einem Bremszylinder (38, 39, 40, 41) der Räder (34, 35, 36, 37) verbunden sind und Bremsfluid zu den Bremszylindern (38, 39, 40, 41) leiten oder von diesen absperren.

7. Bremspedalanordnung nach Anspruch 6, **dadurch gekennzeichnet, dass** die Magnetventile (45, 46, 47; 52, 54, 55) der Differential-Bremsventileinrichtung (44) derart miteinander und mit der ECU (43) verschaltet sind, dass durch Betätigung eines der Schalter (17, 18; 21, 22; 21a, 22a) der Seitenplatten (10, 11; 10a, 11a; 10b, 11b) nach Freigabe durch die ECU (43) das Absperren des Magnetventils (45) oder der Magnetventile (52) des ersten Bremskreises (I) und das das Absperren des Magnetventils (46; 47; 54; 55) des ungebremst verbleibenden Rades (36; 37) des zweiten Bremskreises (II) bewirkbar ist.

8. Bremspedalanordnung nach Anspruch 7, **dadurch gekennzeichnet, dass** wenigstens eines der Magnetventile (45, 46, 47; 52, 54, 55) als ABS-Bremsventil (45, 46, 47; 52, 54, 55) ausgebildet ist.

9. Bremspedalanordnung wenigstens nach Anspruch 5, **dadurch gekennzeichnet, dass** die zweikreisige Bremsanlage (29) eine hydraulische Bremsanlage (29) mit Hydraulikflüssigkeit als Bremsfluid ist, wobei das Bremsventil (2a) ein hydraulisches Bremsventil (2a) ist.

10. Bremspedalanordnung wenigstens nach Anspruch 5, **dadurch gekennzeichnet, dass** die zweikreisige Bremsanlage (48) eine pneumatische Bremsanlage (48) mit Druckluft als Bremsfluid ist, wobei das Bremsventil (2) ein pneumatisches Bremsventil (2a) ist.

## Claims

1. Brake pedal arrangement (1; 1a; 1b) of a brake-steerable vehicle (30), in particular of an agricultural tractor, composed of a pedal assembly (3) with a foot-operable step plate (7; 7a; 7b), by means of the actuation of which a brake valve (2; 2a) can be actuated, wherein the step plate (7; 7a; 7b) has a central plate region (13), which coincides with the longitudinal axis (12) of the step plate (7) and the width of which corresponds approximately to the width of a human foot, and two side plates (10, 11), which are arranged in each case to the side of the central plate region, wherein a pressure on in each case one side plate (10, 11; 10a, 11a; 10b, 11b) actuates in each case one electrical switch (17, 18; 21, 22; 21a; 22a), by means of the actuation of which the braking of a wheel (36; 37) of a vehicle axle can be effected in order to initiate a brake steering operation, wherein the side plates (10, 11; 10a, 11a; 10b, 11b) are in each case rigidly connected to the central plate region (13) of the step plate (7), **characterized in that** the switch (17, 18; 21, 22; 21a; 22a) assigned to in each case one side plate (10, 11; 10a, 11a; 10b, 11b) is connected to the respective side plate (10, 11; 10a, 11a; 10b, 11b) such that a thrust piece (19; 19a; 20; 20a) of the respective switch (17, 18; 21, 22; 21a; 22a) is actuatable directly by the foot (25) of the driver, wherein the switches (17, 18) are push switches (21, 22) which are recessed into the side plates (10, 11; 10b, 11b) and which each have a thrust piece (19, 20) which is in each case arranged so as to be directly actuatable by the foot (25) of the driver, wherein the direction of the pressure with which the two thrust pieces (19, 20) are actuatable corresponds to the direction of the pressure of the foot (25) of the driver on the central region (13) of the step plate (7), or wherein the switches (17, 18) are push switches (21a, 22a) which are mounted onto the side plates (10a, 11a) of the step plate (7a) and which each have a thrust piece (19a, 20a) which is in each case arranged so as to be directly actuatable by the foot (25) of the driver, wherein the direction of the pressure with which the two thrust pieces (19a, 20a) are actuatable runs transversely with respect to the pressure direction of the step plate (7a), such that the thrust pieces (19a, 20a) are actuatable by means of the inside of the foot (26) or by means of the outside of the foot (27) of the foot (25) of the driver.

2. Brake pedal arrangement according to Claim 1, **characterized in that** the length of each side plate (10, 11; 10a, 11a; 10b, 11b) corresponds in each case to the width of the step plate (7, 7a, 7b).

3. Brake pedal arrangement according to Claim 1 or 2, **characterized in that** the side plates (10, 11; 10a, 11a; 10b, 11b) are in each case formed integrally on the respectively associated side surface (14; 15) of the central plate region (13).

4. Brake pedal arrangement according to at least one of Claims 1 - 3, **characterized in that** the brake pedal arrangement (1; 1a; 1b) is a standing brake pedal arrangement (1; 1a), in the case of which the foot plate (7; 7a) has the function of a pedal arm (8), or **in that** the brake pedal arrangement (1b) is a suspended brake pedal arrangement (1b), in the case of which the foot plate (7b) is fastened to a brake pedal lever (28) attached rotatably to the vehicle structure.

5. Brake pedal arrangement at least according to Claim 1, **characterized in that** the brake pedal arrangement (1; 1a; 1b) is part of a two-circuit brake system (29; 48) of a tractor vehicle (30), wherein the brake system (29; 48) has at least one ECU (43) which is electrically connected to the switches (17, 18; 21, 22; 21a; 22a) assigned to the side plates (10, 11; 10a, 11a; 10b, 11b) and which is electrically connected to a differential brake valve device (44).

6. Brake pedal arrangement according to Claim 5, **characterized in that** the differential brake valve device (44) is composed of at least three magnetic valves (45, 46, 47; 52, 54, 55), of which at least one magnetic valve (45; 52) is assigned to a first brake circuit (I) of the front wheels (34, 35) of the tractor vehicle (30) and of which in each case one magnetic valve (46; 54; 47; 55) is assigned to in each case one rear wheel (36; 37) of a second brake circuit (II), wherein the magnetic valves (45, 46, 47; 52, 54, 55) are in each case connected to a brake cylinder (38, 39, 40, 41) of the wheels (34, 35, 36, 37) and conduct brake fluid to, or cut brake fluid off from, the brake cylinders (38, 39, 40, 41).

7. Brake pedal arrangement according to Claim 6, **characterized in that** the magnetic valves (45, 46, 47; 52, 54, 55) of the differential brake valve device (44) are connected to one another and to the ECU (43) such that, by means of actuation of one of the switches (17, 18; 21, 22; 21a; 22a) of the side plates (10, 11; 10a, 11a; 10b, 11b), after enablement by the ECU (43), the shut-off of the magnetic valve (45) or of the magnetic valves (52) of the first brake circuit (I) and the shut-off of the magnetic valve (46; 47; 54; 55) of that wheel (36; 37) of the second brake circuit (II) which remains unbraked can be effected.

8. Brake pedal arrangement according to Claim 7, **characterized in that** at least one of the magnetic valves (45, 46, 47; 52, 54, 55) is formed as an ABS brake valve (45, 46, 47; 52, 54, 55).

9. Brake pedal arrangement at least according to Claim 5, **characterized in that** the two-circuit brake system (29) is a hydraulic brake system (29) with hydraulic liquid as brake fluid, wherein the brake valve (2a) is a hydraulic brake valve (2a).

10. Brake pedal arrangement at least according to Claim 5, **characterized in that** the two-circuit brake system (48) is a pneumatic brake system (48) with compressed air as brake fluid, wherein the brake valve (2) is a pneumatic brake valve (2a).

## Revendications

1. Agencement de pédale de frein (1 ; 1a ; 1b) d'un véhicule à frein de direction (30), en particulier d'un tracteur agricole, constitué d'un module de pédale (3) avec une plaque de pédale (7 ; 7a ; 7b) pouvant être commandée au pied dont l'actionnement permet d'actionner une soupape de frein (2 ; 2a), la plaque de pédale (7 ; 7a ; 7b) présentant une région de plaque centrale (13) coïncidant avec l'axe longitudinal (12) de la plaque de pédale (7), dont la largeur correspond approximativement à la largeur d'un pied d'une personne, et deux plaques latérales (10, 11), qui sont chacune disposées latéralement à la région de plaque centrale, une pression appliquée à chaque plaque latérale (10, 11 ; 10a, 11a ; 10b, 11b) actionnant à chaque fois un commutateur électrique (17, 18 ; 21, 22 ; 21a ; 22a) dont l'actionnement permet d'actionner le freinage d'une roue (36 ; 37) d'un essieu du véhicule afin d'introduire un freinage de direction, les plaques latérales (10, 11 ; 10a, 11a; 10b, 11b) étant connectées à chaque fois rigidement à la région de plaque centrale (13) de la plaque de pédale (7),
**caractérisé en ce que**
le commutateur (17, 18 ; 21, 22 ; 21a, 22a) associé à chaque fois à une plaque latérale respective (10, 11 ; 10a, 11a ; 10b, 11b) est connecté à la plaque latérale respective (10, 11 ; 10a, 11a ; 10b, 11b) de telle sorte qu'une pièce de pression (19 ; 19a ; 20 ; 20a) du commutateur respectif (17, 18 ; 21, 22 ; 21a ; 22a) puisse être actionnée directement par le pied (25) du conducteur, les commutateurs (17, 18) étant des commutateurs à touche (21, 22) incorporés dans les plaques latérales (10, 11 ; 10b, 11b) qui présentent chacun une pièce de pression (19, 20) qui est à chaque fois disposée de telle sorte qu'elle puisse être actionnée directement par le pied (25) du conducteur, la direction de la pression avec laquelle les deux pièces de pression (19, 20) peuvent être actionnées correspondant à la direction de pression du pied (25) du conducteur sur la région centrale (13) de la plaque de pédale (7), ou les commutateurs (17, 18) étant des commutateurs à touche (21a, 22a) placés sur les plaques latérales (10a, 11a) de la plaque de pédale (7a), qui présentent à chaque fois une pièce de pression (19a, 20a) qui est disposée à chaque fois de telle sorte qu'elle puisse être actionnée directement par le pied (25) du conducteur, la direction de la pression avec laquelle les deux pièces de pression (19a, 20a) peuvent être actionnées s'étendant transversalement à la direction de pression de la plaque de pédale (7a) de telle sorte que les pièces de pression (19a, 20a) puissent être actionnées par la région latérale interne (26) ou par la région latérale externe (27) du pied (25) du conducteur.

2. Agencement de pédale de frein selon la revendication 1, **caractérisé en ce que** la longueur de chaque plaque latérale (10, 11 ; 10a, 11a ; 10b, 11b) correspond à chaque fois à la largeur de la plaque de pédale (7 , 7a , 7b).

3. Agencement de pédale de frein selon la revendication 1 ou 2, **caractérisé en ce que** les plaques latérales (10, 11 ; 10a, 11a ; 10b, 11b) sont à chaque fois façonnées d'une seule pièce au niveau de la surface latérale respectivement associée (14 ; 15) de la région de plaque centrale (13) .

4. Agencement de pédale de frein selon au moins l'une quelconque des revendications 1 à 3, **caractérisé en ce que** l'agencement de pédale de frein (1 ; la ; 1b) est un agencement de pédale de frein vertical (1 ; 1a) dans lequel la plaque de pédale (7 ; 7a) présente la fonction d'un bras de pédale (8) ou **en ce que** l'agencement de pédale de frein (1b) est un agencement de pédale de frein suspendu (1b), dans lequel la plaque de pédale (7b) est fixée à un levier de pédale de frein (28) monté de manière rotative à la carrosserie du véhicule.

5. Agencement de pédale de frein selon au moins la revendication 1, **caractérisé en ce que** l'agencement de pédale de frein (1 ; 1a ; 1b) fait partie d'une installation de freinage à deux circuits (29 ; 48) d'un véhicule tracteur (30), l'installation de freinage (29 ; 48) présentant au moins une ECU (43) qui est connectée électriquement aux commutateurs (17, 18 ; 21, 22 ; 21a , 22a) associés aux plaques latérales (10, 11 ; 10a, 11a ; 10b, 11b) et à un dispositif de soupape de frein de différentiel (44).

6. Agencement de pédale de frein selon la revendication 5, **caractérisé en ce que** le dispositif de soupape de frein de différentiel (44) se compose d'au moins trois électrovannes (45, 46, 47 ; 52, 54, 55), dont au moins une électrovanne (45 ; 52) est associée à un premier circuit de freinage (I) des roues avant (34, 35) du véhicule tracteur (30) et dont à chaque fois une électrovanne (46 ; 54 ; 47 ; 55) est associée à chaque fois à une roue arrière (36 ; 37) d'un deuxième circuit de frein (II), les électrovannes (45, 46, 47 ; 52, 54, 55) étant à chaque fois connectées à un cylindre de frein (38, 39, 40, 41) des roues (34, 35, 36, 37) et conduisant un fluide de frein aux cylindres de frein (38, 39, 40, 41) ou bloquant son alimentation à ceux-ci.

7. Agencement de pédale de frein selon la revendication 6, **caractérisé en ce que** les électrovannes (45, 46, 47 ; 52, 54, 55) du dispositif de soupape de frein de différentiel (44) sont branchées les unes aux autres et à l'ECU (43) de telle sorte que par l'actionnement de l'un des commutateurs (17, 18 ; 21, 22 ; 21a ; 22a) des plaques latérales (10, 11 ; 10a, 11a ; 10b, 11b), après la libération par l'ECU (43), le blocage de l'électrovanne (45) ou des électrovannes (52) du premier circuit de frein (I) et le blocage de l'électrovanne (46 ; 47 ; 54 ; 55) de la roue (36 ; 37) restante non freinée du deuxième circuit de frein (en II) puissent être réalisés.

8. Agencement de pédale de frein selon la revendication 7, **caractérisé en ce qu'**au moins l'une des électrovannes (45, 46, 47 ; 52, 54, 55) est réalisé sous forme de soupape de frein ABS (45, 46, 47 ; 52, 54, 55) .

9. Agencement de pédale de frein au moins selon la revendication 5, **caractérisé en ce que** l'installation de freinage à deux circuits (29) est une installation de freinage hydraulique (29) utilisant un liquide hydraulique en tant que fluide de frein, la soupape de frein (2a) étant une soupape de frein hydraulique (2a).

10. Agencement de pédale de frein au moins selon la revendication 5, **caractérisé en ce que** l'installation de freinage à deux circuits (48) est une installation de freinage pneumatique (48) utilisant de l'air comprimé en tant que fluide de frein, la soupape de frein (2) étant une soupape de frein pneumatique (2a).
